# EUROPÄISCHE PATENTSCHRIFT

(11) **EP 2 886 364 B1**
(45) Veröffentlichungstag und Bekanntmachung des Hinweises auf die Patenterteilung: **15.11.2017**
(21) Anmeldenummer: 14004346.4
(22) Anmeldetag: 19.12.2014
(51) Int. Cl.: B42D 25/455, B42D 25/351, B42D 25/346, B42D 25/46, B42D 25/21, B42D 25/364, B42D 25/378, B42D 25/41, B42D 25/324, B42D 25/337, B42D 25/373, B32B 3/30

(54) **Sicherheitsdokument sowie Verfahren zum Herstellen eines Sicherheitsdokuments**
Security document and method for the production of a security document
Document de sécurité et procédé de fabrication d'un document de sécurité

(30) Priorität: 20.12.2013 DE 102013021965
(43) Veröffentlichungstag der Anmeldung: 24.06.2015
(73) Patentinhaber: Giesecke+Devrient Mobile Security GmbH, 81677 München (DE)
(72) Erfinder: Endres, Günter, 81547 München (DE); Salzer, Tobias, 81825 München (DE)

(56) Entgegenhaltungen:
- WO-A2-03/091042
- DE-A1-102007 037 982
- US-A- 3 604 901

## Beschreibung

Die Erfindung betrifft ein Sicherheitsdokument mit einem aus mehreren in einer Schichtungsrichtung aufeinanderfolgenden Substratschichten hergestellten monolithischen Laminatkörper sowie ein Verfahren zum Herstellen eines Sicherheitsdokuments.

Sicherheitsdokumente, wie beispielsweise Personalausweise, Führerscheine, Visa oder Reisepässe sowie Banknoten, d.h. Identifikationsdokumente und Wertpapiere jeglicher Art, stellen hohe Anforderungen an die Fälschungssicherheit. Unter Sicherheitsdokument im Sinne dieser Erfindung werden auch Chipkarten, wie Bankkarten, Debitkarten, Kreditkarten, Bonuskarten, Geldkarten sowie Magnetstreifenkarten, Telekommunikationskarten, SIM (Subscriber Identity Module)-Karten, Zutrittskontrollkarten und sonstige Datenträger verstanden, bei denen auf eine hohe Fälschungssicherheit Wert gelegt wird.

Ein Sicherheitsdokument besteht aus mehreren in einem Laminationsprozess zu einem monolithischen Block verschmolzenen Substratschichten. Der so gebildete monolithische Laminatkörper weist in der Regel quer zu einer Schichtungsrichtung der einzelnen Substratschichten, die aufeinander laminiert werden, eine größere Ausdehnung auf als entlang der Schichtungsrichtung, so dass die Sicherheitsdokumente im wesentlichen eine Kartenform aufweisen.

Aus der DE 10 2007 037 982 A1 ist ein Verbundsicherheitsdokument bekannt, welches zwischen zwei innenliegenden opaken Schichten eine Schicht mit einer Aussparung aufweist. Durch diese Aussparung ergibt sich an der Kartenoberfläche eine haptisch erkennbare, hohl-reliefartige Struktur. Um die hohl-reliefartige Struktur optisch wahrnehmen zu können, ist in einem Oberflächenabschnitt des Laminatkörpers in einem die hohlreliefartige Struktur überdeckenden Bereich eine Interferenzfarbe eingebracht. Im Bereich des Rands der ursprünglichen Aussparung treten aufgrund der unterschiedlichen Reflexionswinkel Farbeffekte auf, ohne daß der Betrachtungswinkel des Sicherheitsdokuments verändert werden muß. Problematisch ist jedoch, dass die optische Qualität des durch die hohl-reliefartige Struktur gebildeten Sicherheitsmerkmals oft unzureichend ist, da die Kanten der hohl-reliefartigen Struktur keine scharfe Begrenzung bilden und der Gesamteindruck eher verschwommen ist.

Das Patentdokument WO 03/091042 A2 offenbart die Merkmale des Oberbegriffs des Anspruchs 1 sowie des Anspruchs 18.

Es ist eine Aufgabe der Erfindung, ein Sicherheitsdokument der oben genannten Art sowie ein Verfahren zum Herstellen eines derartigen Sicherheitsdokuments bereitzustellen, welche die vorgenannten Probleme lösen und insbesondere die Fälschungssicherheit eines Sicherheitsdokuments verbessern.

Erfindungsgemäß wird die vorgenannte Aufgabe durch ein Sicherheitsdokument gelöst, welches einen monolithischen Laminatkörper aus mehreren mittels Druck- und Temperaturbeaufschlagung miteinander verbundenen flächigen Substratschichten umfasst, wobei der Laminatkörper wenigstens eine erste Schicht mit einer Aussparung und wenigstens eine zweite Substratschicht aufweist, welche angrenzend an die erste Substratschicht angeordnet und in Projektion in Schichtungsrichtung mit einer optisch variablen Beschichtung versehen ist.

Erfindungsgemäß ist bezogen auf die Schichtungsrichtung des Laminatkörpers die optisch variable Beschichtung auf der der Aussparung zugewandten Fläche der zweiten Substratschicht angeordnet und die Aussparung vollständig mit einer optisch variablen Beschichtung ausgefüllt. Die Aussparung in der genannten Substratschicht des Laminatkörpers kann beispielsweise durch Stanzen, Plotten oder Laserbearbeitung erfolgen.

Eine optisch variable Beschichtung erzeugt einen sich je nach Betrachtungs- und Reflexionswinkel ändernden optischen Effekt. Eine optisch variable Beschichtung kann beispielsweise durch eine Interferenzfarbe gebildet werden. Eine derartige Interferenzfarbe umfasst sogenannte Interferenzpigmente, die mindestens einen interferenzfähigen, mehrschichtigen Aufbau aufweisen. Die Farbe ist mit einer derart geringen Flächendeckung gedruckt, dass sie im Durchlicht noch erhebliche Anteile des sichtbaren Lichts durchlässt.

Eine optisch variable Beschichtung kann auch durch Dünnschicht-Interferenzpigmente oder Flüssigkristalle erzielt werden. Es eignen sich ebenso Metallschichten, die aufgedampft werden oder als dünne Folien aufgebracht werden können. Als optisch variable Beschichtung können auch Beugungsstrukturen auf die Substratschicht aufgebracht werden. Als optisch variable Beschichtung auch eine Effektfarbe verwendet werden. Die Effektfarbe kann wahlweise oder in Kombination Metall-, Glanz-, Perlglanzpigmente und/ oder Glimmer aufweisen.

Durch das erfindungsgemäße, vollständige Ausfüllen der Aussparung mit der optisch variablen Beschichtung ergibt sich ein visuell gut wahrnehmbares Sicherheitsmerkmal mit einer dreidimensionalen Struktur, welches sich aufgrund der scharfen Konturierung auch für die Ausbildung sehr feiner Strukturen eignet.

Das erfindungsgemäß geschaffene optische Merkmal ist ohne spezielle Sachkenntnis und ohne Hilfsmittel überprüfbar. Zudem ist die Echtheitsüberprüfung einfach und schnell durchführbar und nur schwer reproduzierbar.

Weiterhin wird durch die Ausfüllung der Aussparung verhindert, dass die Oberfläche des Laminatkörpers sich hohlreliefartig absenkt, wodurch die mit einer derartigen Oberflächenveränderung verbundenen Probleme vermieden werden können.

Die vorgenannte Aufgabe wird erfindungsgemäß weiterhin mit einem Sicherheitsdokument gelöst, wobei der Laminatkörper erfindungsgemäß eine dritte Substratschicht aufweist, welche auf der der ersten Substratschicht abgewandten Fläche der zweiten Substratschicht angeordnet ist, wobei die zweite und die dritte Substratschicht im Bereich der Aussparung im sichtbaren Spektralbereich im wesentlichen transparent, transluzent oder semi-transparent ausgebildet sind.

Auf diese Weise kann die dreidimensionale Struktur sowohl im Auflicht als auch im Durchlicht betrachtet werden. Es entstehen durch ein "Aufreißen" der optisch variablen Beschichtung im Randbereich der Aussparung Effekte, die das Licht passieren lassen und so im Durchlicht eine wasserzeichenartige Struktur erkennen lassen.

Gemäß einer Ausführungsform kann die optisch variable Beschichtung sich im Wesentlichen im Bereich der Aussparung sowie einem an die Aussparung angrenzenden Randabschnitt erstrecken. Die unterschiedlichen Reflexionswinkel der optischen variablen Beschichtung treten derart noch deutlicher hervor.

Eine weitere erfindungsgemäße Ausführungsform sieht vor, dass der Laminatkörper weitere Substratschichten aufweist, welche in Projektion mindestens im Bereich der Aussparung im wesentlichen transparent, transluzent oder semi-transparent ausgebildet sind und so das Innere des Laminatkörpers vor schädlichen äußeren Einflüssen schützen.

Gemäß einer weiteren Ausführungsform der Erfindung ist die zweite Substratschicht im sichtbaren Spektralbereich als opake Schicht ausgebildet, wobei sich oberhalb der opaken Schicht die im sichtbaren Spektralbereich im wesentlichen transparente, transluzente oder semi-transparente erste Substratschicht unmittelbar anschließt. Durch die Anordnung der Aussparung in einer transparenten Substratschicht und die Anordnung der optisch variablen Beschichtung auf einer opaken Substratschicht lassen sich besondere optische Effekte erzielen, da die opake Substratschicht durch die transparente erste Substratschicht hindurch sichtbar bleibt.

Die opake Schicht ist zumindest abschnittsweise opak, d. h. sie kann z. B. auch transparente Fenster aufweisen. Unter opak im Sinne der Anmeldung wird eine Schicht verstanden, welche maximal 5 %, insbesondere maximal 2 % des sichtbaren Lichts durchlässt. Unter semi-transparent im Sinne der Anmeldung wird verstanden, dass eine betreffende Schicht zwischen 10% und 90 % des sichtbaren Lichts durchlässt. Dabei kann die Schicht in mikroskopischer Betrachtung zusätzlich zu transparenten Bereichen auch vollständig opake Bereiche aufweisen, wie dies beispielsweise bei Guillochen-Schichten der Fall ist. Durch die transparente, transluzente oder semi-transparente Gestaltung des Laminatkörpers oberhalb der Aussparung sowie oberhalb der optisch variablen Farbe sind sowohl die Aussparung als auch die optisch variable Farbe direkt für das menschliche Auge sichtbar.

Damit ergibt sich erfindungsgemäß ein gut wahrnehmbares optisch variables Merkmal mit einer dreidimensionalen Struktur, wodurch die Echtheitsüberprüfung wesentlich einfacher und schneller durchführbar ist.

Gemäß einer weiteren Ausführungsform nach der Erfindung weist die erste transparente Substratschicht Guillochen auf. Diese Schicht kann entweder oberhalb der ausgesparten Schicht und damit weiter von der opaken Schicht entfernt, oder unterhalb der ausgesparten Schicht und damit näher an der opaken Schicht, angeordnet sein.

Gemäß einer weiteren Ausführungsform ist unterhalb der optisch variablen Beschichtung eine Schicht aus fluoreszierender Farbe angeordnet. Die Schicht kann drucktechnisch aufgebracht werden oder auch vor dem Laminieren als separate Folie vorliegen. Ferner kann die Schicht unmittelbar angrenzend an die optisch variable Schicht angeordnet werden oder auch von dieser beabstandet durch zusätzliche transparente, transluzent oder semi-transparente Schichten. Durch das "Aufreissen" der optisch variablen Beschichtung im Randbereich der Aussparung wird die darunter liegende Schicht aus fluoreszierender Farbe für den Betrachter sichtbar und erzeugt einen gut erkennbaren, plastischen Effekt.

In einer weiteren Ausführungsform nach der Erfindung weist die opake Schicht der Projektion im Bereich der Aussparung ein im wesentlichen transparentes Fenster auf. Damit kann das durch die optisch variable Farbe und die Aussparung gebildete Sicherheitsmerkmal auch in Durchlicht betrachtet werden, wodurch insbesondere der vorgenannte Wasserzeicheneffekt beobachtet werden kann.

In einer weiteren Ausführungsform nach der Erfindung ist die opake Schicht durch wenigstens zwei co-extrudierte Substratschichten gebildet, welche jeweils mindestens zwei Bereiche mit unterschiedlichen Materialeigenschaften aufweisen. Dabei kann einer der Bereiche opakes Material aufweisen und der zweite Bereich zur Ausbildung des oben genannten Fensters transparent sein. Derartige co-extrudierte Folien sind z.B. in DE 10 2008 029 433 A1 beschrieben.

In einer weiteren Ausführungsform nach der Erfindung weist das Sicherheitsdokument durch einen Laserstrahl eingebrachte Kennzeichnungen in Form von Mustern, Buchstaben, Zahlen und/ oder Bildern auf, die aufgrund von durch den Laserstrahl bewirkten, aus Materialumwandlungen resultierenden lokalen Änderungen der optischen Eigenschaften des Sicherheitsdokuments sichtbar sind. Dazu kann das Sicherheitsdokument mit einem Raster aus Zylinderlinsen versehen sein, wie beispielsweise in DE 103 58 784 A1 beschrieben.

Die vorgenannte Aufgabe wird erfindungsgemäß weiterhin mit einem Verfahren zum Herstellen eines Sicherheitsdokuments gelöst, welches die folgenden Schritte umfasst: Bereitstellen einer ersten Substratschicht mit einer Aussparung, Aufbringen einer optisch variablen Beschichtung auf eine Oberfläche einer zweiten Substratschicht, Anordnen mehrerer Substratschichten, einschließlich der ersten und der zweiten Substratschicht derart, dass die zweite Substratschicht an die erste Substratschicht angrenzt und dass die optisch variable Beschichtung an die Aussparung der ersten Substratschicht angrenzt sowie Laminieren der übereinander angeordneten Substratschichten zu einem monolithischen Laminatkörper, wobei die Aussparung der ersten Substratschicht vollständig mit der optisch variablen Beschichtung ausgefüllt wird.

Weiterhin wird erfindungsgemäß die vorgenannte Aufgabe mit einem Verfahren zum Herstellen eines Sicherheitsdokuments gelöst, bei dem im Bereich der Aussparung der ersten Substratschicht die zweite und dritte transparent, transluzent und/ oder semi-transparent ausgebildet sind.

Hinsichtlich der Wirkungsweise des erfindungsgemäßen Verfahrens in den einzelnen Ausführungsformen wird auf die vorstehenden Ausführungen zu dem erfindungsgemäßen Sicherheitsdokument verwiesen. Die bezüglich der vorstehend aufgeführten Ausführungsformen des erfindungsgemäßen Sicherheitsdokuments angegebenen Merkmale können entsprechend auf das erfindungsgemäße Verfahren übertragen werden. Umgekehrt können die bezüglich der vorstehend ausgeführten Ausführungsformen des erfindungsgemäßen Verfahrens angegebenen Merkmale entsprechend auf das erfindungsgemäße Sicherheitsdokument übertragen werden.

Die vorstehenden, sowie weitere vorteilhafte Merkmale der Erfindung werden in der nachfolgenden detaillierten Beschreibung beispielhafter erfindungsgemäßer Ausführungsformen unter Bezugnahme auf die beigefügten schematischen Zeichnungen veranschaulicht. Es zeigen:
- Fig.1: eine Schnittansicht einer Schichtanordnung zur Herstellung eines Laminatkörpers in einer ersten Ausführungsform;
- Fig. 2: eine Schnittansicht eines aus der Schichtanordnung gemäß Fig. 1 durch einen Laminationsprozess hergestellten Laminatkörper;
- Fig. 3: eine Schnittansicht einer Schichtanordnung zur Herstellung eines Laminatkörpers in einer zweiten Ausführungsform;
- Fig. 4: eine Schnittansicht einer Schichtanordnung zur Herstellung eines Laminatkörpers in einer dritten Ausführungsform; sowie
- Fig. 5: eine Schnittansicht einer Schichtanordnung zur Herstellung eines Laminatkörpers in einer vierten Ausführungsform.

In den nachstehend beschriebenen Ausführungsbeispielen sind funktionell oder strukturell einander ähnliche Elemente soweit wie möglich mit den gleichen oder ähnlichen Bezugszeichen versehen. Daher sollte zum Verständnis der Merkmale der einzelnen Elemente eines bestimmten Ausführungsbeispiels auf die Beschreibung anderer Ausführungsbeispiele oder die allgemeine Beschreibung der Erfindung Bezug genommen werden.

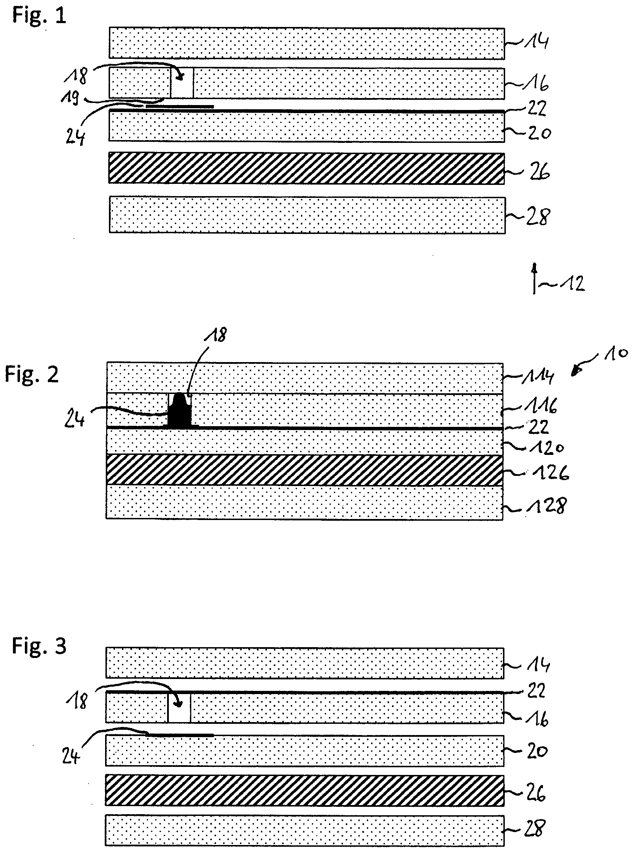

Fig. 1 zeigt eine Schichtanordnung in einer ersten Ausführungsform, welche zu dem in Fig. 2 dargestellten Laminatkörper zusammengefügt wird. Der Laminatkörper gemäß Fig. 2 bildet ein erfindungsgemäßes Sicherheitsdokument 10, wie beispielsweise eine Chipkarte. Die in Fig. 1 gezeigte Schichtanordnung weist eine Reihe von in einer Schichtungsrichtung 12 aufeinander folgenden Folien auf. Von oben her beginnend umfasst die Folienanordnung gemäß Fig. 1 zunächst eine transparente Substratschicht 14.

Unterhalb der Folie 14 ist eine weitere transparente Substratschicht 16 angeordnet, welche mit einer durchgehenden Aussparung 18 versehen ist. Unterhalb der Substratschicht 16 befindet sich eine weitere transparente Substratschicht 20, welche in der vorliegenden Ausführungsform mit Guillochen beschichtet ist. Derartige "Guillochen" sind beispielsweise aus dem Banknotendruck bekannt und werden aus feinen opaken geometrischen Linienmustern oder Ornamenten gebildet. In mikroskopischer Betrachtung weist eine derartige Guillochenschicht zwischen den opaken Linienmustern transparente Bereiche auf, so dass die Guillochenschicht in ihrer Gesamtheit als semi-transparent bezeichnet werden kann.

Auf die der Substratschicht 16 zugewandten Oberfläche der Substratschicht 20 ist eine optisch variable Beschichtung 24 in Gestalt einer Interferenzfarbe aufgebracht. Dabei erstreckt sich die optisch variable Beschichtung 24 lediglich auf den Bereich der Aussparung 18 sowie einen die Aussparung 18 umgebenden Randbereich 19. Die optisch variable Beschichtung 24 enthält Interferenzpigmente, die mindestens einen interferenzfähigen, mehrschichtigen Aufbau aufweisen. Die optisch variable Farbe 24 wird mit einer derart geringen Flächendeckung gedruckt, dass sie im Durchlicht noch erhebliche Anteile des sichtbaren Lichts durchlässt. Damit kann die optisch variable Farbe als semi-transparent bezeichnet werden.

Unterhalb der transparenten Substratschicht 20 ist eine opake Substratschicht 26 sowie eine transparente Substratschicht 28 angeordnet. Die opake Substratschicht 26 kann gemäß einer Ausführungsform auch durch zwei transparent/ opake Substratschichten ersetzt werden. Eine derartig transparent/ opake Substratschicht weist einen transparenten Dickenabschnitt sowie einen opaken Dickenabschnitt auf. Gemäß dieser Ausführungsform kann die transparente Substratschicht 28 auch durch zwei transparente Substratschichten ersetzt sein, zwischen denen eine Designschicht angeordnet ist.

Wie bereits vorstehend erwähnt, wird die Schichtanordnung gemäß Fig. 1 zu dem in Fig. 2 dargestellten monolithischen Laminatkörper verschmolzen. Hierzu werden die Substratschichten mittels Druck und unter Zuführung von thermischer Energie aufeinandergepresst. Der Druck wird hierbei parallel zur Schichtungsrichtung 12 angewendet. Das heißt, an die obere Schicht 14 und die untere Schicht 28 angrenzende Elemente üben einen Druck auf die Folien aus, so dass diese parallel zur Schichtungsrichtung 12 aufeinander gepresst werden. Der dadurch entstehende monolithische Laminatkörper gemäß Fig. 2 weist daraufhin aus den entsprechenden Substratschichten gebildete Schichten auf, welche mit den Bezugszeichen 114, 116, 120, 126 und 128 bezeichnet sind.

Der Laminatkörper weist typischerweise bei einem Einsatz als Chipkarte eine Gesamtdicke von ca. 800 µm auf; Sicherheitsdokumente für andere Anwendungen, wie Führerschein oder Reisepass können auch abweichende Dicken aufweisen. Die Schichtdicken der einzelnen, für das Sicherheitsdokument eingesetzten Substratschichten können entsprechend variieren, liegen aber in der Regel zwischen 10 und 300 µm.

Aufgrund des Laminierverfahrens verändert die optisch variable Beschichtung 24 ihre Form, so dass die Aussparung 18 mit der optisch variablen Beschichtung 24 ausgefüllt ist. Gemäß der Erfindung ist die Aussparung 18 vollständig mit der optisch variablen Beschichtung 24 gefüllt.

Die in die Aussparung 18 eingebrachte optisch variable Beschichtung 24 bildet ein optisch variables Merkmal mit einer dreidimensionalen Struktur, mit welcher eine Echtheitsüberprüfung des Sicherheitsdokuments 10 auf einfache und schnelle Weise durchführbar ist.

Fig. 3 zeigt eine weitere Ausführungsform einer Schichtanordnung zur Herstellung eines monolithischen Laminatkörpers gemäß der Erfindung. In dieser Ausführungsform ist die Guillochenschicht 22 an der Oberseite der die Aussparung 18 aufweisenden transparenten Substratschicht 16 angeordnet. Die Beschichtung mit der optisch variablen Beschichtung 24 ist weiterhin an der der Substratschicht 16 zugewandten Oberfläche der Substratschicht 20 angeordnet. Im Weiteren ist der Schichtaufbau gemäß Fig. 3 identisch zum Schichtaufbau gemäß Fig. 1.

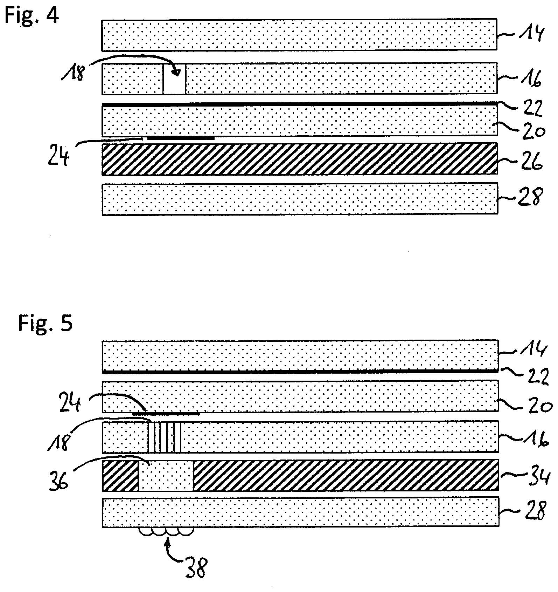

Fig. 4 zeigt eine weitere Ausführungsform einer Schichtanordnung zur Herstellung eines monolithischen Laminatkörpers nach der Erfindung. Der Schichtaufbau gemäß Fig. 4 unterscheidet sich vom Schichtaufbau gemäß Fig. 1 dadurch, dass die Beschichtung mit der optisch variablen Beschichtung 24 an der von der transparenten Substratschicht 16 wegweisenden Oberfläche der transparenten Substratschicht 20 angeordnet ist. In diesem Fall fließt die optisch variable Beschichtung 24 beim Laminierverfahren nicht in die Aussparung 18. Es ist sichergestellt, dass der Laminatkörper, bezogen auf die Schichtungsrichtung 12, oberhalb der Aussparung 18 sowie oberhalb der optisch variablen Beschichtung 22 zumindest semi-transparent gestaltet ist. Mit anderen Worten sind alle bezogen auf die Schichtungsrichtung oberhalb der Substratschicht 16 mit der Aussparung 18 sowie oberhalb der optisch variablen Farbe 24 angeordneten Substratschichten, d.h. im vorliegenden Beispiel die Substratschichten 14,16 und 20, zumindest semi-transparent gestaltet. Damit ist für den Betrachter sowohl die Aussparung 18 als auch die optisch variable Beschichtung unmittelbar sichtbar, wodurch ein für die Echtheitsprüfung nutzbarer charakteristischer dreidimensionaler Effekt entsteht.

Fig. 5 zeigt eine weitere Ausführungsform einer Schichtanordnung zur Herstellung eines Laminatkörpers nach der Erfindung. Gemäß dieser Ausführungsform ist die transparente Substratschicht 16 unmittelbar oberhalb einer opaken Substratschicht 34 mit einem Sichtfenster 36 angeordnet. Die transparente Substratschicht 16 weist in dieser Ausführungsform mehrere schmale, nebeneinander angeordnete Aussparungen 18 auf. Das Sichtfenster 36 der opaken Substratschicht 34 ist in Projektion in Schichtungsrichtung 12 im Bereich der Aussparungen 18 angeordnet. Dabei ist das Sichtfenster durch ein transparentes Material gebildet. Als Substratschicht 34 wird in der vorliegenden Ausführungsform eine sogenannte co-extrudierte Substratschicht verwendet, welche mit dem transparenten Bereich und dem opaken Bereich zwei Bereiche mit unterschiedlichen Materialeigenschaften aufweist. Eine derartige coextrudierte Substratschicht kann beispielsweise als eine der in DE 10 2008 029 433 A1 beschriebenen Ausführungsformen ausgebildet werden.

Darüber hinaus kann das Sicherheitsdokument 10 an einer ihrer Oberflächen ein Linsenraster 38 aufweisen, wie beispielhaft in Fig. 5 illustriert. Das Linsenraster kann in einer Ausführungsform aus einer Mehrzahl paralleler Zylinderlinsen bestehen, die in die transparente Folie 28 geprägt sind. Mittels eines Laserstrahls werden Kennzeichnungen in Form von Mustern, Buchstaben, Zahlen und/ oder Bildern in eine Aufzeichnungsschicht eingebracht, die aufgrund von durch den Laserstrahl bewirkten, aus Materialumwandlungen resultierenden lokalen Änderungen der optischen Eigenschaften in der Aufzeichnungsschicht sichtbar sind. Bezüglich möglicher Ausgestaltungen dieses Sicherheitsmerkmals wird auf DE 103 58 784 verwiesen.

## Patentansprüche

1. Sicherheitsdokument umfassend einen monolithischen Laminatkörper aus mehreren mittels Druck- und Temperaturbeaufschlagung miteinander verbundenen flächigen Substratschichten, wobei der Laminatkörper wenigstens eine erste Substratschicht mit einer Aussparung und wenigstens eine zweite Substratschicht aufweist, welche angrenzend an die erste Substratschicht angeordnet und zumindest bereichsweise mit einer optisch variablen Beschichtung versehen ist,
**dadurch gekennzeichnet, dass** die optisch variable Beschichtung im Wesentlichen auf der der Aussparung zugewandten Fläche der zweiten Substratschicht angeordnet ist und die Aussparung vollständig mit der optisch variablen Beschichtung ausgefüllt ist.

2. Sicherheitsdokument nach Anspruch 1, **dadurch gekennzeichnet, dass** der Laminatkörper eine dritte Substratschicht aufweist, welche auf der der ersten Substratschicht abgewandten Fläche der zweiten Substratschicht angeordnet ist, wobei die zweite und die dritte Substratschicht im Bereich der Aussparung im sichtbaren Spektralbereich im wesentlichen transparent, transluzent oder semi-transparent ausgebildet sind.

3. Sicherheitsdokument nach Anspruch 1 oder 2, **dadurch gekennzeichnet, dass** die Aussparung der ersten Substratschicht in Richtung der Oberfläche des Laminatkörpers von mindestens einer transparenten Substratschicht bedeckt ist.

4. Sicherheitsdokument nach wenigstens einem der Ansprüche 1 bis 3, **dadurch gekennzeichnet, dass** die optisch variable Beschichtung sich im Wesentlichen im Bereich der Aussparung sowie einem an die Aussparung angrenzenden Randabschnitt erstreckt.

5. Sicherheitsdokument nach wenigstens einem der Ansprüche 1 bis 4, **dadurch gekennzeichnet, dass** der Laminatkörper weitere Substratschichten aufweist, welche mindestens im Bereich der Aussparung im Wesentlichen transparent, transluzent oder semi-transparent ausgebildet sind.

6. Sicherheitsdokument nach wenigstens einem der Ansprüche 1 bis 5, **dadurch gekennzeichnet, dass** die optisch variable Beschichtung Flüssigkristalle aufweist.

7. Sicherheitsdokument nach wenigstens einem der Ansprüche 1 bis 5, **dadurch gekennzeichnet, dass** die optisch variable Beschichtung Interferenzpigmente aufweist.

8. Sicherheitsdokument nach wenigstens einem der Ansprüche 1 bis 5, **dadurch gekennzeichnet, dass** die optisch variable Beschichtung eine metallisierte Schicht aufweist.

9. Sicherheitsdokument nach wenigstens einem der Ansprüche 1 bis 5, **dadurch gekennzeichnet, dass** die optisch variable Beschichtung Beugungsstrukturen aufweist.

10. Sicherheitsdokument nach wenigstens einem der Ansprüche 1 bis 5, **dadurch gekennzeichnet, dass** die optisch variable Beschichtung wahlweise oder in Kombination Metall-, Glanz-, Perlglanzpigmente und/ oder Glimmer aufweist.

11. Sicherheitsdokument nach wenigstens einem der Ansprüche 1 bis 10, **dadurch gekennzeichnet, dass** die zweite Substratschicht im sichtbaren Spektralbereich als opake Schicht ausgebildet ist, wobei sich oberhalb der opaken Schicht die im sichtbaren Spektralbereich im wesentlichen transparente, transluzente oder semi-transparente erste Substratschicht unmittelbar anschließt.

12. Sicherheitsdokument nach wenigstens einem der Ansprüche 1 bis 11, **dadurch gekennzeichnet, dass** die erste Substratschicht an ihrer Oberfläche Guillochen aufweist.

13. Sicherheitsdokument nach wenigstens einem der Ansprüche 1 bis 12, **dadurch gekennzeichnet, dass** die opake Schicht im Bereich der Aussparung ein im Wesentlichen transparentes Fenster aufweist.

14. Sicherheitsdokument nach Anspruch 13, **dadurch gekennzeichnet, dass** das transparente Fenster durch eine Ausstanzung gebildet ist, in die eine transparente Substratschicht mit im Wesentlichen gleichen Abmessungen eingelegt ist.

15. Sicherheitsdokument nach Anspruch 13, **dadurch gekennzeichnet, dass** das transparente Fenster durch wenigstens zwei coextrudierte Substratschichten gebildet ist, welche jeweils mindestens zwei Bereiche mit unterschiedlichen Materialeigenschaften aufweisen.

16. Sicherheitsdokument nach Anspruch 15, **dadurch gekennzeichnet, dass** die coextrudierten Substratschichten im sichtbaren Spektralbereich Bereiche unterschiedlicher Transmission aufweisen.

17. Sicherheitsdokument nach wenigstens einem der Ansprüche 1 bis 16, **dadurch gekennzeichnet, dass** das Sicherheitsdokument durch einen Laserstrahl eingebrachte Kennzeichnungen in Form von Mustern, Buchstaben, Zahlen und/ oder Bildern aufweist, die aufgrund von durch den Laserstrahl bewirkten, aus Materialumwandlungen resultierenden lokalen Änderungen der optischen Eigenschaften des Sicherheitsdokument sichtbar sind.

18. Verfahren zum Herstellen eines Sicherheitsdokuments, mit den Schritten:
- Bereitstellen einer ersten Substratschicht mit einer Aussparung,
- Aufbringen einer optisch variablen Beschichtung auf eine Oberfläche einer zweiten Substratschicht,
- Anordnen mehrerer Substratschichten, einschließlich der ersten und der zweiten Substratschicht derart, dass die zweite Substratschicht an die erste Substratschicht angrenzt und dass die optisch variable Beschichtung an die Aussparung der ersten Folie angrenzt, sowie
- Laminieren der übereinander angeordneten Substratschichten zu einem monolithischen Laminatkörper, wobei die Aussparung der ersten Substratschicht vollständig mit der optisch variablen Beschichtung ausgefüllt wird.

19. Verfahren nach Anspruch 18, **dadurch gekennzeichnet, dass** im Bereich der Aussparung der ersten Substratschicht die zweite und dritte sowie alle weiteren Substratschichten transparent, transluzent und/ oder semi-transparent ausgebildet sind.

20. Verfahren nach Anspruch 18 oder 19, welches zur Herstellung des Sicherheitsdokuments nach einem der Ansprüche 1 bis 17 konfiguriert ist.

## Claims

1. A security document comprising a monolithic laminate body of a plurality of flat substrate layers interconnected by means of pressure and temperature application, wherein the laminate body has at least one first substrate layer with a recess and at least one second substrate layer which is arranged adjacent to the first substrate layer and is supplied at least regionally with an optically variable coating, **characterized in that** the optically variable coating is arranged substantially on the area of the second substrate layer facing the recess and the recess is filled completely with the optically variable coating.

2. The security document according to claim 1, **characterized in that** the laminate body has a third substrate layer arranged on the area of the second substrate layer facing away from the first substrate layer, wherein the second and the third substrate layer in the region of the recess are adapted to be substantially transparent, translucent or semi-transparent in the visible spectral range.

3. The security document according to claim 1 or 2, **characterized in that** the recess of the first substrate layer in the direction of the surface of the laminate body is covered by at least one transparent substrate layer.

4. The security document according to at least one of the claims 1 to 3, **characterized in that** the optically variable coating substantially extends in the region of the recess and an edge section adjacent to the recess.

5. The security document according to at least one of the claims 1 to 4, **characterized in that** the laminate body has further substrate layers which are adapted to be substantially transparent, translucent or semi-transparent at least in the region of the recess.

6. The security document according to at least one of the claims 1 to 5, **characterized in that** the optically variable coating has liquid crystals.

7. The security document according to at least one of the claims 1 to 5, **characterized in that** the optically variable coating has interference pigments.

8. The security document according to at least one of the claims 1 to 5, **characterized in that** the optically variable coating has a metalized layer.

9. The security document according to at least one of the claims 1 to 5, **characterized in that** the optically variable coating has diffraction structures.

10. The security document according to at least one of the claims 1 to 5, **characterized in that** the optically variable coating has alternatively or in combination metal pigments, glossy pigments, pearl luster pigments and/or mica.

11. The security document according to at least one of the claims 1 to 10, **characterized in that** the second substrate layer is adapted as opaque layer in the visible spectral range, wherein above the opaque layer there immediately adjoins the first substrate layer that is substantially transparent, translucent or semi-transparent in the visible spectral range.

12. The security document according to at least one of the claims 1 to 11, **characterized in that** the first substrate layer has guilloches on its surface.

13. The security document according to at least one of the claims 1 to 12, **characterized in that** the opaque layer has a substantially transparent window in the region of the recess.

14. The security document according to claim 13, **characterized in that** the transparent window is formed by a punching, into which a transparent substrate layer is inserted with substantially the same dimensions.

15. The security document according to claim 13, **characterized in that** the transparent window is formed by at least two coextruded substrate layers, each of which having at least two regions with different material properties.

16. The security document according to claim 15, **characterized in that** the coextruded substrate layers have regions of different transmission in the visible spectral range.

17. The security document according to at least one of the claims 1 to 16, **characterized in that** the security document has markings in the form of patterns, characters, numbers and/or images introduced by a laser beam, which are visible due to local changes of the optical properties of the security document resulting from material transformations caused by the laser beam.

18. A method for producing a security document, comprising the steps of:
- making available a first substrate layer with a recess,
- applying an optically variable coating to a surface of a second substrate layer,
- arranging a plurality of substrate layers, including the first and the second substrate layer, such that the second substrate layer is adjacent to the first substrate layer and that the optically variable coating is adjacent to the recess of the first foil, and
- laminating the substrate layers arranged above one another to form a monolithic laminate body, wherein the recess of the first substrate layer is filled completely with the optically variable coating.

19. The method according to claim 18, **characterized in that** in the region of the recess of the first substrate layer the second and third and all further substrate layers are adapted to be transparent, translucent and/or semi-transparent.

20. The method according to claim 18 or 19, which is configured for the manufacture of the security document according to any of the claims 1 to 17.

## Revendications

1. Document de sécurité comprenant un corps stratifié monolithique constitué de plusieurs couches de substrat en surface jointes ensemble par action de pression et de température, cependant que le corps stratifié comporte au moins une première couche de substrat ayant un évidement et au moins une deuxième couche de substrat agencée de manière adjacente à la première couche de substrat et pourvue au moins partiellement d'un revêtement optiquement variable,
**caractérisé en ce que** le revêtement optiquement variable est essentiellement agencé sur la surface, de la deuxième couche de substrat, tournée vers l'évidement, et **en ce que** l'évidement est entièrement rempli par le revêtement optiquement variable.

2. Document de sécurité selon la revendication 1, **caractérisé en ce que** le corps stratifié comporte une troisième couche de substrat qui est agencée sur la surface, de la deuxième couche de substrat, tournée à l'opposé de la première couche de substrat, cependant que la deuxième et la troisième couche de substrat sont, dans la zone de l'évidement, réalisées sous forme essentiellement transparente, translucide ou semi-transparente dans la plage spectrale visible.

3. Document de sécurité selon la revendication 1 ou 2, **caractérisé en ce que** le revêtement de la première couche de substrat est, en direction de la surface du corps stratifié, recouvert d'au moins une couche de substrat transparente.

4. Document de sécurité selon au moins une des revendications de 1 à 3, **caractérisé en ce que** le revêtement optiquement variable s'étend essentiellement sur la zone de l'évidement ainsi que sur une partie de bord adjacente à l'évidement.

5. Document de sécurité selon au moins une des revendications de 1 à 4, **caractérisé en ce que** le corps stratifié comporte d'autres couches de substrat qui, au moins dans la zone de l'évidement, sont réalisées sous forme essentiellement transparente, translucide ou semi-transparente.

6. Document de sécurité selon au moins une des revendications de 1 à 5, **caractérisé en ce que** le revêtement optiquement variable comporte des cristaux liquides.

7. Document de sécurité selon au moins une des revendications de 1 à 5, **caractérisé en ce que** le revêtement optiquement variable comporte des pigments de couche d'interférence.

8. Document de sécurité selon au moins une des revendications de 1 à 5, **caractérisé en ce que** le revêtement optiquement variable comporte une couche métallisée.

9. Document de sécurité selon au moins une des revendications de 1 à 5, **caractérisé en ce que** le revêtement optiquement variable comporte des structures de diffraction.

10. Document de sécurité selon au moins une des revendications de 1 à 5, **caractérisé en ce que** le revêtement optiquement variable comporte au choix ou en combinaison des pigments métalliques, brillants ou nacrés et/ou du mica.

11. Document de sécurité selon au moins une des revendications de 1 à 10, **caractérisé en ce que** la deuxième couche de substrat est réalisée sous forme de couche opaque dans la plage spectrale visible, cependant que, au-dessus de la couche opaque, la première couche de substrat essentiellement transparente, translucide ou semi-transparente dans la plage spectrale visible vient se jouxter directement.

12. Document de sécurité selon au moins une des revendications de 1 à 11, **caractérisé en ce que** la première couche de substrat comporte en sa surface des guillochis.

13. Document de sécurité selon au moins une des revendications de 1 à 12, **caractérisé en ce que** la couche opaque comporte, dans la zone de l'évidement, une fenêtre essentiellement transparente.

14. Document de sécurité selon la revendication 13, **caractérisé en ce que** la fenêtre transparente est formée par une découpe dans laquelle une couche de substrat transparente dont les dimensions sont essentiellement identiques est insérée.

15. Document de sécurité selon la revendication 13, **caractérisé en ce que** la fenêtre transparente est formée par au moins deux couches de substrat coextrudées qui comportent respectivement au moins deux zones dont les propriétés de matériaux sont différentes.

16. Document de sécurité selon la revendication 15, **caractérisé en ce que** les couches de substrat coextrudées présentent dans la plage spectrale visible des zones dont la transmission est différente.

17. Document de sécurité selon au moins une des revendications de 1 à 16, **caractérisé en ce que** le document de sécurité comporte des marquages pratiiqués par un faisceau laser sous forme de motifs, lettres, chiffres et/ou images qui, en raison de modifications locales, engendrées par le faisceau laser et résultant de transformations de matière, des propriétés optiques du document de sécurité, sont visibles.

18. Procédé de fabrication d'un document de sécurité, comprenant les étapes :
- mise à disposition d'une première couche de substrat ayant un évidement,
- application d'un revêtement optiquement variable sur une surface d'une deuxième couche de substrat,
- agencement de plusieurs couches de substrat, y compris de la première et de la deuxième couche de substrat, de telle façon que la deuxième couche de substrat est adjacente à la première couche de substrat et que le revêtement optiquement variable est adjacent à l'évidement de la première feuille, ainsi que
- laminage des couches de substrat superposées, de manière à obtenir un corps stratifié monolithique, cependant que l'évidement de la première couche de substrat est entièrement rempli par le revêtement optiquement variable.

19. Procédé selon la revendication 18, **caractérisé en ce que**, dans la zone de l'évidement de la première couche de substrat, la deuxième et la troisième ainsi que toutes les autres couches de substrat sont réalisées sous forme transparente, translucide ou semi-transparente.

20. Procédé selon la revendication 18 ou 19, lequel est configuré pour la fabrication du document de sécurité selon une des revendications de 1 à 17.
